# DEMANDE DE BREVET EUROPEEN

(11) **EP 0 960 892 A1**
(43) Date de publication de la demande: **01.12.1999**
(21) Numéro de dépôt: 99201564.4
(22) Date de dépôt: 19.05.1999
(51) Int. Cl.: C08F 255/02

(54) **Polymère du propylène, procédé pour son obtention et utilisation**

(30) Priorité: 25.05.1998 BE 9800392
(71) Demandeur: SOLVAY POLYOLEFINS EUROPE - BELGIUM (Société Anonyme), 1050 Bruxelles (BE)
(72) Inventeur: Gauthy, Fernand, 1780 Wemmel (BE); Kaszacs, Martine, 1420 Braine L'Alleud (BE)
(74) Mandataire: Troch, Geneviève

(57) **Abrégé**

Polymère du propylène contenant des unités monomériques dérivées d'au moins un composé fonctionnel (A) comprenant deux insaturations vinyliques et un ou plusieurs noyaux aromatiques présentant un durcissement structural sous contrainte se traduisant par une augmentation de la viscosité élongationnelle à l'état fondu lors de l'allongement ou de l'extension jusqu'à rupture de la masse fondue, caractérisé en outre en ce que le rapport entre la contrainte nominale pour un taux d'élongation de 20 et celle pour un taux d'élongation de 2 (à 190°C et 1 sec⁻¹) est supérieur à 1.

Procédé continu de préparation dudit polymère du propylène par mélange en fondu d'un polymère du propylène, d' un composé fonctionnel (A), d'un générateur de radicaux libres et d'un antioxydant dans une extrudeuse avec introduction séquencée du composé fonctionnel (A) et du générateur de radicaux libres.

Utilisation du polymère du propylène, notamment, pour la fabrication de mousses.

## Description

La présente invention concerne un polymère du propylène présentant des propriétés rhéologiques améliorées. Elle concerne également un procédé d'obtention de ce polymère, son utilisation pour le façonnage d'objets par des procédé d'extrusion- ou d'injection-soufflage, de thermoformage ou d'enduction, ainsi que pour la fabrication de mousses.

Les polymères du propylène sont connus pour leurs propriétés mécaniques, chimiques et électriques ainsi que pour leur résistance à la chaleur.

Leur coût relativement peu élevé en fait un matériau de choix pour un grand nombre d'applications telles que la formation d'objets façonnés.

Néanmoins, leurs propriétés rhéologiques et en particulier leur tenue en fondu sont telles qu'il est difficile de les mettre en oeuvre par certaines méthodes telles que l'extrusion moussage et le thermoformage.

Différentes approches ont été proposées pour résoudre ce problème.

C'est ainsi que, dans le brevet US-A-5 635 567 (SOLVAY S.A.), on a proposé des polymères du propylène modifiés qui présentent des propriétés rhéologiques à l'état fondu améliorées et en particulier une augmentation de la résistance à la déformation lors de l'allongement ou de l'extension à l'état fondu (ci-après désignés par le vocable RMPP). Ces polymères présentent en outre une stabilité thermique élevée. Il s'agit en l'occurrence de polymères du propylène (homo- et copolymères) contenant des unités monomériques dérivées d'au moins un composé fonctionnel (A) comprenant au moins deux insaturations vinyliques et un ou plusieurs noyaux aromatiques, tels que le divinylbenzène. Selon ce document, ces RMPP sont produits par un procédé continu consistant à mélanger en fondu (au moins) un composé fonctionnel (A) et (au moins) un générateur de radicaux libres dans une extrudeuse comprenant à sa sortie une zone de compression précédant une zone d'évacuation avec introduction d'au moins un additif antioxydant dans la masse fondue au plus tard avant l'entrée de celle-ci dans la zone de compression. Le polymère du propylène, le(s) composé(s) fonctionnel(s) (A) et le(s) générateur(s) de radicaux libres peuvent être introduits indifféremment simultanément, éventuellement en les mélangeant au préalable, ou encore séparément dans un ordre quelconque. Selon les exemples, le composé fonctionnel (A) et le générateur de radicaux libres sont introduits simultanément sous la forme d'un mélange via une trémie d'alimentation à l'entrée de l'extrudeuse avant la zone de fusion.

Il est maintenant apparu que la stabilité de l'étirage en fondu des RMPP de l'art antérieur obtenus par mise en oeuvre conjointe du composé fonctionnel (A) et du générateur de radicaux libres n'était pas optimale, de sorte qu'un risque de rupture d'écoulement de la masse fondue ne pouvait être exclu avec pour conséquences une réduction locale d'épaisseur en thermoformage et la coalescence des cellules de mousse par rupture des parois.

La présente invention a pour but de procurer des polymères du propylène dont les propriétés rhéologiques à l'état fondu sont encore améliorées et qui ne présentent pas les inconvénients des compositions de l'art antérieur.

A cet effet, l'invention procure un polymère de propylène contenant des unités monomériques dérivées d'un composé fonctionnel (A) comprenant au moins deux insaturations vinyliques et un ou plusieurs noyaux aromatiques présentant un durcissement structural sous contrainte se traduisant par une augmentation de la viscosité élongationnelle à l'état fondu lors de l'allongement ou de l'extension jusqu'à rupture de la masse fondue, caractérisé en outre en ce que le rapport entre la contrainte nominale pour un taux d'élongation de 20 et la contrainte nominale pour un taux d'élongation de 2 est supérieur à 1, l'élongation étant mesurée à une température constante de 190°C sous un gradient d'élongation constant de 1 sec⁻¹.

Dans le cadre de la présente invention, on entend par durcissement structural sous contrainte d'un polymère la propriété dudit polymère de présenter, à l'état fondu, une augmentation de sa viscosité élongationnelle lors de l'allongement ou de l'extension jusqu'à rupture de la masse fondue. Cette propriété est aisément déterminée au moyen de rhéomètres qui fournissent l'évolution de la viscosité élongationnelle à l'état fondu en fonction du temps pour une température et un gradient d'élongation donnés.

Par contrainte nominale, on entend ici la force instantanée de traction aux deux extrémités de l'échantillon divisée par la section initiale de l'échantillon.

Des polymères du propylène préférés selon la présente invention présentent un rapport entre la contrainte nominale pour un taux d'élongation supérieur à 20 et inférieur au taux d'élongation à la rupture et la contrainte nominale pour un taux d'élongation de 2 qui est supérieur à 1, l'élongation étant mesurée à une température constante de 190°C sous un gradient d'élongation constant de 1 sec⁻¹.

Des polymères du propylène tout particulièrement préférés selon la présente invention présentent un rapport entre la contrainte nominale pour un taux d'élongation supérieur à 20 et inférieur au taux d'élongation à la rupture et la contrainte nominale pour un taux d'élongation de 2 qui est supérieur à 1 et qui croît avec le taux d'élongation, l'élongation étant mesurée à une température constante de 190°C sous un gradient d'élongation constant de 1 sec⁻¹.

Les polymères du propylène contenant des unités monomériques dérivées d'un composé fonctionnel (A) selon l'invention sont issus de polymères du propylène choisis parmi les homopolymères du propylène et les copolymères de ce dernier contenant au moins 50 % en poids de propylène et au moins un autre monomère. A titre d'exemples préférés de ces autres monomères, on peut citer les α-oléfines contenant de 2 à 20 atomes de carbone telles que par exemples l'éthylène, le 1-butène, le 1-pentène, le 1-hexène, les méthyl-1-butènes, les méthyl-1-pentènes, le 1-octène et le 1-décène.

Par copolymères du propylène, on entend aussi bien les copolymères statistiques que les copolymères à blocs. Ces polymères sont bien connus de l'homme du métier.

Les premiers sont généralement constitués de chaînes macromoléculaires dans lesquelles sont répartis statistiquement les monomères. La teneur en propylène de ces copolymères statistiques est le plus souvent supérieure ou égale à 70 % en poids, de préférence supérieure ou égale 75 % en poids. Les seconds sont constitués de blocs distincts de composition variable obtenus au cours d'étapes de polymérisation successives; chaque bloc consistant généralement en un homopolymère du propylène ou d'une autre α-oléfine ou en un copolymère statistique comprenant du propylène et au moins un autre monomère choisi parmi les monomères cités ci-avant. Sont également considérés comme copolymères à blocs des copolymères constitués d'un bloc choisi parmi les homopolymères du propylène et les copolymères statistiques de ce dernier et d'un autre bloc choisi parmi les copolymères d'α-oléfines différentes du propylène. Les copolymères à blocs préférés selon l'invention contiennent un bloc homopolymère du propylène et un bloc copolymère statistique propylène/éthylène et/ou butène.

Les homopolymères du propylène et les copolymères de ce dernier avec l'éthylène et/ou le 1-butène donnent de bons résultats.

Il va de soi que le polymère du propylène contenant des unités monomériques dérivées d'un composé fonctionnel (A) selon la présente invention peut être issu d'un seul polymère du propylène tel que défini ci-avant ou d'un mélange desdits polymères. Dans ce cas, il est avantageux d'utiliser deux polymères du propylène tels que décrits ci-avant (polymères (P) et (Q)) dont l'indice de fluidité en fondu (MFI) est différent. Dans le cadre de la présente invention, le MFI est mesuré à 230°C sous une charge de 2,16 kg selon la norme ASTM D 1238 (1986).

Le polymère (P) est le plus souvent choisi parmi les homo- et copolymères du propylène dont le MFI est de 0,1 à 20 g/10 min. De préférence, le MFI du polymère (P) est d'au moins 0,5 g/10 min et plus particulièrement d'au moins 1 g/10 min. On obtient de bons résultats lorsque le polymère (P) a un MFI d'au plus 10 g/10 min et plus particulièrement d'au plus 5 g/10 min. Le polymère (Q) est le plus souvent choisi parmi les homopolymères du propylène.

Généralement le polymère (Q) a un MFI supérieur à 20 g/10 min et plus particulièrement supérieur ou égal à 25 g/10 min. Des polymères (Q) dont le MFI est supérieur ou égal à 30 g/10 min donnent de bons résultats. Le MFI du polymère (Q) est en outre généralement d'au plus 1000 g/10 min et plus particulièrement d'au plus 500 g/10 min.

Les quantités respectives des polymères (P) et (Q) sont généralement telles que leur rapport en poids est de 0,05 à 50. De préférence le rapport en poids des polymères (P) et (Q) est d'au moins 1. On obtient de bons résultats lorsque ce rapport est de 1 à 10.

Le polymère du propylène selon la présente invention ne contient de préférence pas de polymère autre que le ou les polymères du propylène.

Les polymères du propylène selon la présente invention contiennent en outre des unités monomériques dérivées d'au moins un composé fonctionnel (A) comprenant au moins deux insaturations vinyliques et un ou plusieurs noyaux aromatiques. Les polymères préférés selon la présente invention sont tels que le composé fonctionnel (A) est le divinylbenzène.

La teneur en unités monomériques dérivées du composé fonctionnel (A) présentes dans les polymères du propylène selon l'invention est d'au moins 0,01 g par kg de polymère. Cette quantité est en outre avantageusement supérieure ou égale à 0,1 et plus particulièrement supérieure ou égale à 0,5 g par kg de polymère.

La quantité maximale d'unités monomériques dérivées du composé (A) n'est pas critique. Pour des raisons économiques, on préfère toutefois qu'elle soit inférieure ou égale à 50 g et le plus souvent inférieure ou égale à 25 g par kg de polymère. On obtient de bons résultats lorsque cette quantité est inférieure ou égale à 10 g par kg de polymère. Des polymères du propylène contenant de 0,1 à 10 g d'unités monomériques dérivées de composé fonctionnel (A) par kg de polymère conviennent bien.

Les polymères du propylène selon l'invention contiennent en outre au moins un additif antioxydant. Cet additif est souvent présent en quantité d'au moins 0,1 g par kg de polymère du propylène, de préférence d'au moins 0,5 g et plus particulièrement d'au moins 1 g par kg de polymère du propylène. La quantité d'additif antioxydant est en outre le plus souvent inférieure ou égale à 100 g et plus particulièrement inférieure ou égale à 50 g par kg de polymère. Des quantités inférieures ou égales à 10 g par kg de polymère du propylène conviennent particulièrement bien.

On obtient de bons résultats lorsque la quantité d'additif antioxydant est de 0,5 à 10 g par kg de polymère du propylène.

Cet additif antioxydant peut être tout additif antioxydant ou tout mélange d'additifs antioxydants connu pour polyoléfines. Il peut par exemple être choisi parmi les composés comprenant un groupement phénol stériquement encombré, parmi les composés phosphorés et parmi les composés comprenant un groupement thio-éther. De bons résultats sont obtenus avec les composés comprenant un groupement phénol stériquement encombré et les composés phosphorés. A titre d'exemples de composés comprenant un groupement phénol stériquement encombré, on peut utiliser le pentaérythrityl tétrakis(3,5-di-t-butyl-4-hydroxyphénylpropionate), le stéaryl β-(3,5-di-t-butyl-4-hydroxyphényl)propionate, le N,N'-bis(3-(3',5'-di-t-butyl-4'-hydroxyphényl)propionyl)hexaméthylènediamine, le bis(β(3,5-di-t-butyl-4-hydroxyphényl-éthyl) subérate, le diéthyl 3,5-di-t-butyl-4-hydroxybenzylphosphonate et le calcium bis(éthyl(3,5-di-t-butyl-4-hydroxy-benzyl) phosphonate). A titre de composés phosphorés, on peut mettre en oeuvre par exemple le tris(2,4-di-t-butylphényl) phosphite, le tris(para-nonylphényl) phosphite, le tris(2,4-dinonylphényl) phosphite et le tétrakis(2,4-di-t-butylphényl)4,4'-biphénylylènediphosphonite. A titre de composés comprenant un groupement thio-éther, on peut citer par exemple le distéaryl thiodipropionate et le dilauryl thiodipropionate.

Lorsqu'on vise une application alimentaire, on utilise de préférence des composés comprenant un groupement phénol stériquement encombré et des composés phosphorés, les composés comprenant un groupement thio-éther convenant moins pour ces applications. Le pentaérythrityl tétrakis(3,5-di-t-butyl-4-hydroxyphényl propionate), le tris(2,4-di-t-butylphényl) phosphite et leurs mélanges conviennent particulièrement bien.

Les polymères du propylène selon la présente invention peuvent également contenir d'autres additifs conventionnels tels que des agents antioxydants supplémentaires, des agents antiacides, des agents anti-UV, des agents antistatiques, des colorants ou des matériaux de charge. Ils peuvent également contenir des unités monomériques dérivées de composés fonctionnels différents des composés (A). A titre d'exemples non limitatifs de ces composés fonctionnels différents des composés (A), on peut citer l'anhydride maléique, le styrène et l'éthylvinylbenzène.

Les polymères du propylène selon la présente invention présentent, tout comme ceux décrits dans le brevet EP-B-0 718 328 précité, simultanément un durcissement structural sous contrainte et une stabilité thermique excellente. Cette dernière peut, par exemple, être caractérisée par la période d'induction de l'oxydation telle que mesurée par analyse thermique différentielle au cours de laquelle on soumet le polymère du propylène à une oxydation sous oxygène à une température constante de 180°C et on mesure le temps s'écoulant jusqu'à l'apparition d'un phénomène exothermique provoqué par l'oxydation du polymère du propylène. La période d'induction de l'oxydation à 180°C des polymères du propylène selon la présente invention est généralement d'au moins 10 minutes, plus souvent d'au moins 20 minutes et plus particulièrement d'au moins 50 minutes.

Outre le durcissement structural sous contrainte, les polymères du propylène selon la présente invention présentent une stabilité accrue de l'étirage en fondu, ce qui élimine pratiquement le risque de rupture d'écoulement de la masse fondue.

Les polymères du propylène selon la présente invention présentent en outre généralement les propriétés avantageuses reprises ci-après.

Leur viscosité à bas gradient de cisaillement est généralement plus élevée que celle des polymères correspondants qui ne contiennent pas d'unités monomériques dérivées de composé fonctionnel (A). Ils présentent en outre le plus souvent une température et une vitesse de cristallisation particulièrement élevées ce qui conduit à une amélioration de leur transparence et de leur rigidité.

Ils peuvent également être mis en oeuvre à des cadences plus élevées que celles utilisées pour les polymères du propylène traditionnels.

On remarque également que, lorsque le polymère du propylène est un copolymère à blocs, la dispersion des deux blocs est remarquablement fine et homogène, ce qui conduit à une amélioration des propriétés mécaniques. Cette propriété est particulièrement avantageuse pour les copolymères à blocs contenant un bloc cristallin du propylène et un bloc élastomérique propylène/éthylène pour lesquels une meilleure dispersion de la phase élastomérique dans la phase cristalline conduit à une amélioration du compromis rigidité-résistance aux chocs.

On remarque également que les polymères du propylène selon la présente invention contiennent peu, et le plus souvent avantageusement pas, d'agglomérats infusibles lors de leur mise en oeuvre.

Par ailleurs, les polymères du propylène selon la présente invention contiennent avantageusement peu, et de préférence pas, de fractions insolubles dans le xylène chaud. De ce fait, les objets façonnés au départ de ces polymères ne présentent que très peu, et avantageusement pas, d'imperfections. Le plus souvent, cette fraction de polymère insoluble dans le xylène chaud est inférieure à 10 % en poids, de préférence inférieure à 5 % en poids et plus particulièrement inférieure à 1 % en poids.

Les polymères du propylène selon la présente invention présentent des propriétés rhéologiques en fondu qui les rendent particulièrement bien adaptés à l'obtention d'objets façonnés par extrusion et en particulier par extrusion- ou injection-soufflage, thermoformage ou enduction. Ils conviennent également bien pour la fabrication de mousses. Ces utilisations constituent dès lors des aspects supplémentaires de la présente invention. Les polymères du propylène selon l'invention qui présentent un indice de fluidité en fondu élevé conviennent avantageusement pour l'injection à cadence élevée.

Les polymères du propylène selon l'invention qui sont issus des polymères (P) et (Q) présentent en outre l'avantage d'avoir une rigidité particulièrement élevée.

La présente invention concerne également un procédé particulier de préparation des polymères du propylène contenant des unités monomériques dérivées d'un composé fonctionnel (A) selon la présente invention.

A cet effet, la présente invention concerne un procédé continu de préparation d'un polymère du propylène contenant des unités monomériques dérivées d'au moins un composé fonctionnel (A) comprenant au moins deux insaturations vinyliques et un ou plusieurs noyaux aromatiques présentant un durcissement structural sous contrainte par mélange en fondu d'un polymère du propylène, d'au moins un composé fonctionnel (A), d'au moins un générateur de radicaux libres et d'au moins un additif antioxydant dans une extrudeuse comprenant à sa sortie une zone de compression précédant une zone d'évacuation dans lequel l'additif antioxydant est introduit dans la masse fondue au plus tard avant l'entrée de celle-ci dans ladite zone de compression, caractérisé en ce que le composé fonctionnel (A) et le générateur de radicaux libres sont introduits de manière séquencée dans le polymère du propylène.

Par extrudeuse, on entend désigner tout dispositif continu comprenant une zone d'alimentation et à sa sortie une zone d'évacuation précédée d'une zone de compression, cette dernière forçant la masse fondue à passer au travers de la zone d'évacuation.

Le procédé selon la présente invention résulte de la constatation surprenante que lorsque le composé fonctionnel (A) et le générateur de radicaux libres sont introduits séparément et mélangés séparément avec le polymère du propylène, on produit un polymère du propylène selon l'invention dont les propriétés rhéologiques et en particulier la stabilité de l'étirage en fondu sont améliorées, par comparaison avec des polymères similaires obtenus par mise en oeuvre conjointe du composé (A) et du générateur de radicaux libres.

En général, l'ordre d'introduction du composé (A) et du générateur de radicaux libres dans l'extrudeuse n'est pas critique. Avantageusement, on introduit l'un de ceux-ci dans le polymère de propylène avant sa mise en fusion et l'autre dans la masse fondue de polymère de propylène. Dans tous les cas, l'introduction séquencée du composé (A) et du générateur de radicaux libres conduit à une dispersion plus homogène du composé (A) dans la zone de fusion et à des résines finales plus homogènes et plus reproductibles avec comme corollaires, d'une part, la possibilité de produire des résines identiques sur tout type d'extrudeuse et, d'autre part, l'amélioration de la tenue à l'étirage en fondu en conservant une résine homogène, aisément extrudable et granulable.

On peut donc soit introduire initialement le générateur de radicaux libres et ultérieurement le composé (A), soit procéder de manière inverse.

L'introduction initiale du composé (A) et différée du générateur de radicaux libres donne d'excellents résultats.

Suivant un mode de réalisation particulièrement préféré, le composé (A) est mélangé au polymère du propylène avant sa mise en fusion et le générateur de radicaux libres est introduit dans la masse fondue de propylène contenant le composé (A). Lorsque le composé fonctionnel (A) est introduit en initial, il est avantageusement introduit tel quel dans l'extrudeuse en même temps ou juste après l'introduction du polymère de propylène. Lorsqu'il est introduit en différé, il est avantageusement mélangé au préalable avec une partie de polymère de propylène. Quant au générateur de radicaux libres, son mode de mise en oeuvre, que ce soit en initial ou en différé, dépendra essentiellement de sa nature physique. S'il est liquide, il sera avantageusement introduit tel quel dans l'extrudeuse. S'il est solide, il sera soit introduit en solution dans un solvant, soit et de préférence mélangé préalablement avec une partie de polymère de propylène.

L'extrudeuse peut comprendre notamment les parties suivantes :
(1) une trémie d'alimentation principale à l'entrée de l'extrudeuse,
(2) un ou plusieurs dispositifs d'alimentation différée qui permettent d'introduire séparément de manière séquencée le composé fonctionnel (A) et le générateur de radicaux libres (appelé ci-après plus simplement générateur) optionnellement avec du polymère du propylène,
(3) un ou plusieurs éléments de vis permettant la propagation de la matière à extruder,
(4) éventuellement un ou plusieurs éléments malaxeurs permettant le mélange de la matière à extruder, les éléments de vis et les éléments malaxeurs pouvant éventuellement s'alterner,
(5) une ou plusieurs zones d'échauffement permettant la fusion du polymère du propylène et la réaction en fondu des différents réactifs,
(6) à la sortie, une zone de compression suivie d'une zone d'évacuation, la zone de compression ayant pour fonction de compresser la matière à extruder afin de la forcer au travers de la zone d'évacuation de l'extrudeuse,
(7) un ou plusieurs dispositifs d'alimentation différée disposés à un endroit où la masse comprenant la polyoléfine, le composé (A) et le générateur de radicaux libres est déjà fondue, et avant que la matière à extruder n'entre dans la zone de compression (6) précitée, destinés à l'introduction de l'additif antioxydant.

Les parties (1) à (6) ne sont pas nécessairement disposées dans cet ordre.

La zone d'évacuation de l'extrudeuse peut être suivie d'un dispositif de granulation ou d'un dispositif donnant à la matière extrudée une forme profilée telle qu'un film.

L'extrudeuse utilisable dans le procédé selon l'invention peut également contenir, de préférence après la zone (5), une zone de dégazage afin d'éliminer les quantités excessives de composé (A), de générateur n'ayant pas réagi et éventuellement les sous-produits générés lors de l'extrusion.

Les extrudeuses pouvant convenir dans le procédé selon l'invention sont notamment les extrudeuses du type monovis, les extrudeuses du type co-malaxeur telles que par exemples les extrudeuses commercialisées par la société BUSS, les extrudeuses du type bi-vis co-rotatives interpénétrées ou non interpénétrées, les extrudeuses du type bi-vis contra-rotatives interpénétrées ou non interpénétrées et les extrudeuses du type multi-vis. On utilise de préférence une extrudeuse du type co-malaxeur ou du type bi-vis co-rotatives interpénétrées.

Dans le procédé selon l'invention, il est essentiel que l'introduction de l'additif antioxydant intervienne en différé, à savoir dans une étape d'alimentation différée et distincte, au moment où le composé fonctionnel (A) et le générateur de radicaux libres sont déjà introduits et présents au sein de la masse fondue comprenant le polymère du propylène, le composé (A) et le générateur, et avant que la masse ne soit entrée dans la zone de compression précédant la zone d'évacuation de l'extrudeuse. Par "introduction différée de l'additif antioxydant", on entend désigner l'introduction du ou des additifs antioxydants en une seule fois ou sous forme d'introduction étagée, dans la masse fondue au plus tard avant l'entrée de celle-ci dans la zone de compression de l'extrudeuse.

Afin d'éviter tous les problèmes imputables à la présence de solvant ou de diluant dans le polymère final, on préfère généralement introduire l'additif antioxydant sous forme d'une poudre, avantageusement avec une partie de polymère du propylène.

Dans une variante avantageuse du procédé selon l'invention, on additionne une petite quantité d'agent stabilisant, appelé ci-après "agent préstabilisant", au polymère du propylène avant ou au moment de l'introduction de celui-ci dans l'extrudeuse et donc avant l'introduction de l'additif antioxydant. Cette variante s'avère particulièrement performante lorsque le polymère du propylène mis en oeuvre est un polymère vierge sortant du réacteur de polymérisation sans avoir subi de traitement ultérieur.

L'agent préstabilisant a alors pour fonction de protéger ledit polymère du propylène contre toute dégradation dès l'étape de fusion et de diminuer les éventuels phénomènes de corrosion de l'extrudeuse.

Les conditions dans lesquelles le procédé selon l'invention est mis en oeuvre sont telles qu'il y a mélange en fondu des différents réactifs. Le procédé selon l'invention est en outre généralement mis en oeuvre dans des conditions telles qu'il y ait réaction au moins partielle des molécules du composé fonctionnel (A) entre elles et/ou avec le polymère du propylène sous l'effet des radicaux libres produits par le générateur. De préférence, ce procédé est mis en oeuvre dans des conditions telles qu'il y ait au moins réaction partielle du composé fonctionnel (A) avec le polymère du propylène de manière à ce qu'une partie des chaînes macromoléculaires du polymère du propylène soient liées entre elles par l'intermédiaire des unités monomériques du composé (A). La température de la masse fondue dépend dès lors de la nature du polymère du propylène et du générateur de radicaux libres. Elle est en général d'au moins 100°C, le plus souvent d'au moins 130°C et en particulier d'au moins 140°C. Généralement, on travaille à une température de la masse fondue ne dépassant pas 350°C, le plus souvent pas 300°C, et plus particulièrement pas 250°C.

La durée du procédé dépend des quantités de réactifs mises en oeuvre, de la nature chimique de ces réactifs, de la température, du type d'extrudeuse utilisé, de la vitesse de rotation de sa (ou ses) vis et de son débit. La durée est le plus souvent de 1 seconde à 1 heure, de préférence de 5 secondes à 30 minutes, plus particulièrement de 10 secondes à 10 minutes. Les durées d'au plus 5 minutes suffisent généralement pour produire les polymères du propylène selon le présente invention. Le polymère du propylène mis en oeuvre est de préférence un polymère vierge. Comme cela a déjà été mentionné, différents polymères du propylène peuvent être mis en oeuvre dans le procédé selon la présente invention. Toutefois, on ne met généralement en oeuvre à titre de polymère que des polymères du propylène et dans le cas où plusieurs polymères du propylène sont mis en oeuvre, on ne met de préférence en oeuvre que les polymères (P) et (Q) définis ci-avant.

Dans ce cas particulier, les quantités respectives des deux polymères sont généralement telles que leur rapport en poids est de 0,05 à 50.

De préférence, ce rapport est d'au moins 1. On obtient de bons résultats lorsque ce rapport est de 1 à 10.

La quantité de composé (A) mis en oeuvre est généralement d'au moins 0,05 g par kg de polymère du propylène mis en oeuvre, de préférence d'au moins 0,1 g et plus particulièrement d'au moins 1 g par kg de polymère du propylène mis en oeuvre. Cette quantité est en outre le plus souvent d'au plus 75 g et généralement d'au plus 40 g par kg de polymère du propylène mis en oeuvre. On obtient des bons résultats lorsque l'on met en oeuvre au plus 25 g de composé (A) par kg de polymère du propylène. Des quantités de composés fonctionnels (A) de 1 à 10 g par kg de polymère du propylène conviennent bien.

Le polymère du propylène et le composé fonctionnel (A) sont mélangés en fondu en présence d'un générateur de radicaux libres. A titre d'exemples de générateur de radicaux libres, on utilise de préférence des peroxydes organiques. Ceux-ci présentent avantageusement une demi-vie d'au moins 1 minute à 170°C. On peut citer comme exemples typiques le peroxyde de t-butyl cumyl, le α,α'-bis(t-butylperoxy isopropyl)benzène, le 3,5-bis(t-butylperoxy)-3,5-diméthyl 1,2-dioxolane, le peroxyde de di-t-butyl, le 2,5-diméthyl-2,5-di-t-butylperoxyhexane, le p-menthane hydroperoxyde, le pinane hydroperoxyde, le diisopropylbenzène mono-α-hydroperoxyde, l'hydroperoxyde de cumène, le t-butyl hydroperoxyde et leurs mélanges. Les générateurs préférés sont le α,α'-bis(t-butylperoxy isopropyl)benzène et le 2,5-diméthyl-2,5-di-t-butylperoxyhexane.

Le générateur de radicaux libres est en général mis en oeuvre en une quantité suffisante pour permettre la réaction des molécules de composé fonctionnel (A) entre elles et/ou avec les chaînes de polymère du propylène.

Par ailleurs, il est souhaitable que la quantité ne dépasse pas la quantité nécessaire car tout excès de générateur entraîne une dégradation du polymère du propylène. La quantité est habituellement au moins égale à 0,05 g par kg de polymère du propylène, en particulier au moins égale à 0,1 g par kg, les valeurs d'au moins 0,2 g par kg de polymère du propylène étant les plus avantageuses. En général, la quantité ne dépasse pas 10 g, de préférence pas 5 g et plus particulièrement pas 1 g par kg de polymère du propylène. On obtient de bons résultats lorsque la quantité de générateur de radicaux libres est de 0,1 à 5 g par kg de polymère du propylène, les valeurs d'environ 0,4 g par kg étant les plus recommandées.

L'additif antioxydant mis en oeuvre a pour fonction de neutraliser l'excès de radicaux présents dans l'extrudeuse et de conférer de la stabilité thermique au polymère du propylène obtenu. Sa mise en oeuvre selon la présente invention est également essentielle pour conférer aux polymères du propylène simultanément les bonnes propriétés rhéologiques et thermiques décrites ci-avant.

La quantité totale d'additif antioxydant dépend en grande partie de la quantité de générateur mise en oeuvre et de l'application visée pour le polymère du propylène. La quantité totale est en général au moins égale à 0,01 g, habituellement au moins égale à 0,1 g de préférence d'au moins 0,5 g par kg de polymère du propylène mis en oeuvre. Cette quantité totale est en outre le plus souvent inférieure ou égale à 100 g, de préférence inférieure ou égale à 50 g et plus particulièrement inférieure ou égale à 10 g par kg de polymère du propylène. On obtient de bons résultats lorsque la quantité d'additif antioxydant est de 0,1 à 10 g par kg de polymère du propylène, les quantités d'environ 3 g d'additif antioxydant par kg de polymère étant les plus courantes.

Lorsque l'on met en oeuvre un agent préstabilisant tel que décrit ci-avant, cet agent préstabilisant peut être choisi parmi les agents stabilisants conventionnels tels que les agents anti-UV, les agents antiacides, les agents antioxydants et leurs mélanges. Les agents antioxydants sont spécialement préférés. La quantité totale d'agent préstabilisant mise en oeuvre dans cette forme de réalisation doit être faible afin de ne pas compromettre les réactions entre les différents réactifs. Elle ne dépasse pas, en général, 1,0 g par kg de polymère du propylène mis en oeuvre, le plus souvent elle est inférieure ou égale à 0,5 g et plus particulièrement inférieure ou égale à 0,1 g par kg de polymère du propylène. La quantité totale d'agent préstabilisant est habituellement au moins égale à 0,005 g par kg de polymère du propylène mis en oeuvre, de préférence d'au moins 0,03 g par kg et plus particulièrement d'au moins 0,05 g par kg de polymère du propylène mis en oeuvre.

Au cours de l'extrusion, on peut également incorporer aux polymères du propylène selon la présente invention, à un moment quelconque, d'autres additifs usuels des polymères du propylène tels que, à titre d'exemples non limitatifs, des agents stabilisants, des agents antiacides, des agents antistatiques, des colorants organiques ou minéraux, des agents moussants et des matériaux de charge tels que des fibres de verre. Les agents antiacides sont avantageusement introduits au moins partiellement via la trémie principale.

Ainsi défini, le procédé selon la présente invention permet de manière particulièrement simple et reproductible d'obtenir les polymères du propylène décrits ci-avant contenant des unités monomériques dérivées d'un composé fonctionnel (A).

Dans une variante particulière, le procédé selon la présente invention comprend en outre une étape d'épuration du polymère du propylène produit. Ce traitement supplémentaire a pour fonction d'éliminer tous les composés volatils et en particulier les résidus de composé fonctionnel (A) n'ayant pas réagi. Il permet également, si nécessaire, de récupérer lesdits composés fonctionnels.

Le traitement d'épuration utilisé dans le procédé selon la présente invention consiste en un traitement de granules de polymère du propylène selon la présente invention par un courant gazeux.

A cet effet, le polymère issu de la zone d'évacuation de l'extrudeuse est granulé puis mis en contact avec un courant gazeux pouvant être un courant d'air chaud, un courant gazeux contenant de la vapeur d'eau ou un courant de vapeur d'eau. Le traitement des granules par un courant gazeux contenant de la vapeur d'eau donne de bons résultats. Dans ce cas particulier, le courant gazeux est généralement constitué d'un gaz tel que l'azote ou l'air, l'air étant préféré.

Le traitement des granules par un courant de vapeur d'eau est particulièrement préféré.

Les conditions opératoires (température, durée, pression) dans lesquelles ce traitement d'épuration est effectué peuvent varier dans une large mesure pour autant qu'il y ait diffusion des molécules de composé fonctionnel (A) n'ayant pas réagi vers la surface des granules de polymère et entraînement de ces dernières par le courant gazeux. De préférence, on travaille dans des conditions telles que la fusion et/ou la dégradation du polymère du propylène selon l'invention sont évitées.

La température est en général d'au moins 70°C, plus précisément d'au moins 80°C, les valeurs d'au moins 90°C étant les plus courantes. La température est en outre habituellement inférieure ou égale à 200 °C, le plus souvent inférieure ou égale à 160°C, les valeurs d'au plus 120°C étant les plus utilisées. On obtient de bons résultats lorsque la température est d'environ 100°C.

La durée du traitement d'épuration est conditionnée entre autres par la teneur résiduelle de composé (A), par la cinétique de la diffusion desdits composés dans les granules, par les échanges thermiques des dispositifs utilisés et par les applications souhaitées pour le polymère du propylène. La durée de ce traitement est généralement d'au moins environ 30 minutes, plus particulièrement d'au moins environ 2 heures, les durées d'au moins environ 10 heures étant les plus courantes. Cette durée ne dépasse toutefois généralement pas environ 140 heures et le plus souvent pas environ 120 heures, des durées d'au maximum 100 heures étant préférées.

Lorsque le traitement d'épuration est effectué par mise en contact des granules de polymère du propylène selon l'invention avec un courant gazeux contenant, ou constitué de, la vapeur d'eau, la quantité totale de vapeur d'eau est généralement d'au moins 0,05 kg, de préférence d'au moins 0,2 kg et plus particulièrement d'au moins 0,5 kg par kg de granules de polymère du propylène. En général, cette quantité est inférieure ou égale à 20 kg, le plus souvent inférieure ou égale à 10 kg et plus particulièrement inférieure ou égale à 5 kg de vapeur d'eau par kg de granules de polymère.

Selon l'invention, le traitement d'épuration des polymères du propylène peut être effectué en continu ou en discontinu. Le dispositif utilisé pour ce traitement d'épuration peut être tout récipient dans lequel on introduit les granules de polymère du propylène et dans lequel on effectue un balayage gazeux. De préférence le courant gazeux est introduit à l'extrémité inférieure du récipient.

Ce dispositif contient en outre avantageusement un dispositif conventionnel destiné à l'épuration des effluents et éventuellement à la récupération et au recyclage du composé fonctionnel (A). Lorsque le traitement d'épuration a été effectué en mettant en oeuvre de la vapeur d'eau, les granules de polymère du propylène sont ensuite préférentiellement séchées par tout moyen connu à cet effet.

Les polymères du propylène ainsi obtenus ne contiennent qu'une très faible quantité de composé fonctionnel (A) libre. Selon la présente invention, on entend par quantité de composé fonctionnel (A) libre, appelée ci-après plus simplement (QA), la quantité de composé (A) dosée dans le test décrit ci-après en rapport avec les exemples illustrant l'invention. On obtient ainsi des polymères dont le (QA) est inférieur à 100 mg par kg et de préférence inférieur à 20 mg par kg de polymère du propylène. Les polymères selon la présente invention qui ont subi le traitement d'épuration sont avantageusement tels que leur (QA) est inférieure ou égale à 1 mg, de préférence inférieure ou égale à 0,5 mg et plus particulièrement inférieure ou égale à 0,1 mg par kg de polymère du propylène. Les polymères du propylène ainsi définis peuvent être utilisés dans les applications alimentaires ainsi que dans toute autre application dans laquelle une grande pureté est requise. Ils présentent en outre l'avantage de ne pas dégager de composés volatils lors de leur mise en oeuvre ultérieure. De ce fait, on ne rencontre pas de problèmes d'odeur et/ou de sécurité liés à la présence des composés volatils et les objets obtenus lors desdites mises en oeuvre ne contiennent pas de bulles générées par lesdits composés. Ces polymères particuliers constituent dès lors un objet particulier de la présente invention.

Les exemples qui suivent sont destinés à illustrer l'invention.

L'exemple 1R est donné à titre comparatif. La signification des symboles utilisés dans les exemples, les unités exprimant les grandeurs mentionnées et les méthodes de mesure de ces grandeurs sont explicités ci-dessus.
- MFI :: indice de fluidité en fondu mesuré à 230°C sous une charge de 2,16 kg et exprimé en g/10 min (norme ASTM D 1238 - 1986).
- PI :: période d'induction de l'oxydation du polymère à 180°C exprimée en minutes. La période d'induction est mesurée par une analyse thermique différentielle au cours de laquelle on soumet le polymère du propylène à une oxydation sous oxygène à une température constante de 180°C et on mesure le temps s'écoulant jusqu'à l'apparition d'un phénomène exothermique provoqué par l'oxydation du polymère du propylène. La période d'induction est une mesure de la stabilité thermique.
- QA :: quantité de composé fonctionnel (A) libre exprimée en mg par kg de polymère du propylène. Cette valeur est obtenue en broyant 50 g de granules dans l'azote liquide à l'aide d'un broyeur à boulets, en soumettant pendant 16 heures, 40 g de matière broyée à un traitement d'extraction à l'acétone dans un extracteur SOXHLET et en dosant après concentration par évaporation, la quantité de composé (A) présente dans l'acétone par chromatographie liquide haute pression.

Dans tous les exemples, le polymère du propylène utilisé est un homopolymère du propylène de MFI égal à 2,15 commercialisé sous la dénomination ELTEX® P HL 001P par SOLVAY (S.A.).

Tous les exemples ont été réalisés au moyen d'une extrudeuse double-vis co-rotative de type CLEXTRAL BC21 (rapport L/D= +/- 35) aménagée de manière à ce qu'elle comprenne, dans l'ordre, les parties suivantes :
(a) une trémie d'alimentation principale à l'entrée de l'extrudeuse, destinée à introduire le polymère du propylène et optionnellement des additifs de ce dernier;
(b) un premier dispositif d'alimentation différée destiné à introduire le composé fonctionnel (A) ou le générateur de radicaux libres;
(c) deux premiers éléments de vis correspondant aux alimentations (a) et (b) refroidis à l'eau;
(d) une zone chauffée à 180°C pour permettre la fusion du polymère et la réaction en fondu;
(e) un deuxième dispositif d'alimentation différée disposé à un endroit situé après l'introduction du composé fonctionnel (A) ou du générateur de radicaux libres et où la masse comprenant le polymère, le composé (A) ou le générateur est déjà fondue. Ce deuxième dispositif d'alimentation différée est destiné à introduire le générateur de radicaux libres ou le composé fonctionnel (A) et, optionnellement, un polymère du propylène identique à, ou différent de celui introduit en (a);
(f) un troisième dispositif d'alimentation différée disposé après le second dispositif d'alimentation différée (e) destiné à introduire les anti-oxydants et, optionnellement, un polymère du propylène identique à, ou différent de celui introduit en (a);
(g) une zone de compression suivie d'une zone d'évacuation, la première ayant pour fonction de compresser la matière à extruder au travers de la seconde.

La vitesse de rotation des vis de l'extrudeuse était 200 tr/min.

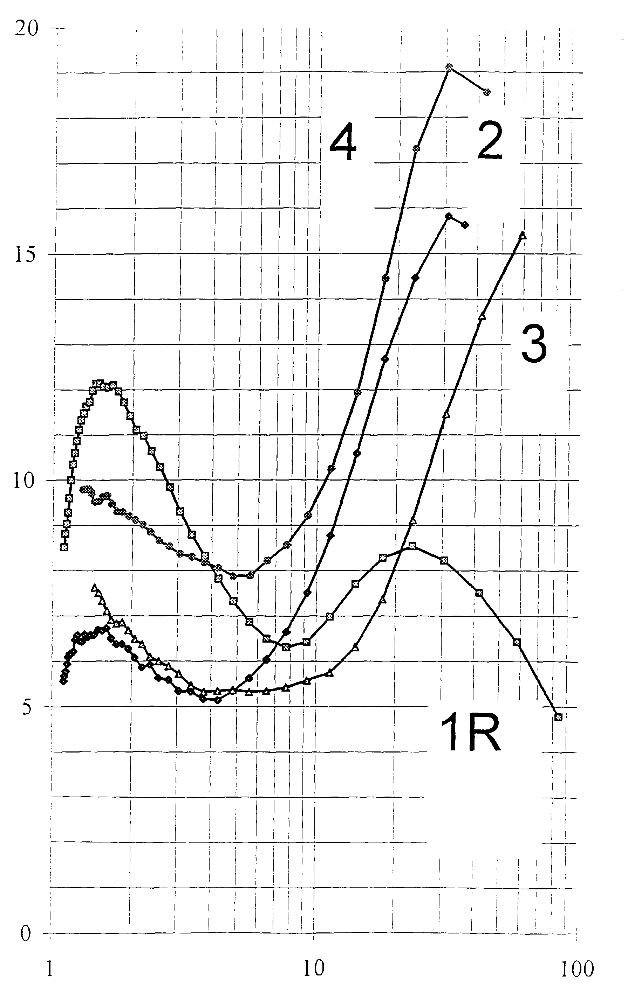

La contrainte nominale des polymères du propylène, c'est-à-dire la force instantanée de traction aux extrémités de l'échantillon divisée par la section initiale de l'échantillon, est déterminée au moyen d'un rhéomètre commercialisé par RHEOMETRICS sous la dénomination RHEOMETRICS ELONGATIONAL RHEOMETER FOR MELT- RME. Les courbes reprises dans la figure unique ci-annexée (appelées ci-après diagrammes RME) représentent la variation, à 190°C et sous un gradient constant de 1 sec⁻¹, de la contrainte nominale exprimée en kPa (en ordonnée) en fonction de l'allongement, c'est-à-dire le rapport entre la longueur de l'échantillon étiré L et sa longueur initiale L₀, soit L/L₀ (en abscisse).

Les polymères du propylène contenant des unités monomériques dérivées du divinylbenzène produits dans les exemples ont tous été granulés et les granules soumis à un stripping à la vapeur par traitement à 100°C pendant 80 heures avec au moins environ 1 kg de vapeur/ kg de polymère. Dans tous les cas, leur valeur QA telle que définie ci-dessus a été inférieure à 1 mg/ kg de polymère.

A partir des granules épurés, on a extrudé, en vue de la détermination des diagrammes RME, des profilés ayant les dimensions approximatives suivantes : épaisseur : 1 mm, longueur : 52 mm et largeur : 7 mm.

Les polymères du propylène produits dans tous les exemples (y compris l'exemple de référence 1) présentent un durcissement structural sous contrainte.

### Exemple 1 de référence

On alimente l'extrudeuse, via la trémie (a), à un débit de 9 kg/h, avec du polymère du propylène. On introduit, via le premier dispositif d'alimentation différée (b) sous courant d'azote et à un débit de 40 g/h un mélange contenant, pour 1000 parties en poids, 925 parties d'un mélange 62 % en poids de divinylbenzène et 48 % en poids d'éthylvinylbenzène (ce mélange, appelé ci-après plus simplement DVB, est préalablement purifié sur alumine) et 75 parties de 2,5-diméthyl-2,5-di-t-butylperoxyhexane (DHBP).

On introduit, via le troisième dispositif d'alimentation différée (f), à un débit de 1 kg/h, du polymère du propylène contenant par kg, 20 g de pentaérythrityl tétrakis (3,5-di-t-butyl-4-hydroxyphényl propionate) (AO1), 20 g de tris(2,4-di-t-butylphényl) phosphite (AO2) et 10 g de stéarate de calcium (StCa).

Le produit sortant de l'extrudeuse présente les caractéristiques suivantes :
- MFI : 1g/10 min
- PI : > 30 min.

Le diagramme RME (courbe 1R dans la figure en annexe) du polymère du propylène épuré par stripping montre que l'évolution de la contrainte nominale en fonction de l'allongement subit une étape de forte décroissance entre les deux parties de la courbe en forme de dôme et qu'en l'occurrence le rapport entre la contrainte nominale pour un taux d'élongation de 20 (190°C et 1 sec⁻¹) et celle pour un taux d'élongation de 2 (mêmes conditions) est inférieur à 1.

Cette décroissance de la contrainte nominale traduit une instabilité ou autrement dit un manque de tenue en fondu qui est néfaste dans les processus de mises en oeuvre qui sont exigeants sur le plan de la tenue en fondu, tels que par exemple le façonnage d'articles cellulaires. Par exemple, cette instabilité de la contrainte nominale pendant l'étirage en fondu peut entraîner la rupture d'une partie des parois des cellules de mousse situées au coeur des profilés de mousse.

### Exemple 2 (selon l'invention)

Cet exemple est en tout point identique à l'exemple comparatif 1R, excepté :
- qu'on alimente l'extrudeuse, via la trémie (a), à un débit de 8 kg/h, avec du polymère du propylène,
- que l'on introduit 9 ml/h de 2,5-diméthyl-2,5-di-t-butylperoxyhexane (DHBP) via le premier dispositif d'alimentation (b),
- que l'on introduit, via le deuxième dispositif d'alimentation (e), 30 ml/h en poids d'un mélange de 62% en poids de divinylbenzène et de 48 % en poids d'éthylvinylbenzène en même temps que 1 kg/h de polymère du propylène,
- que l'on introduit, via le troisième dispositif d'alimentation différée (f), à un débit de 1 kg/h, du polymère du propylène contenant par kg, 20 g de pentaérythrityl tétrakis (3,5-di-t-butyl-4-hydroxyphényl propionate) (AO1), 20 g de tris(2,4-di-t-butylphényl) phosphite (AO2) et 10 g de stéarate de calcium (StCa).

Le produit sortant de l'extrudeuse présente les caractéristiques suivantes :
- MFI : 1,4 g/10 min
- PI : > 30 min.

Le diagramme RME (courbe 2 dans la figure en annexe) du polymère du propylène épuré par stripping montre que l'évolution de la contrainte nominale en fonction de l'allongement ne subit qu'une étape de décroissance réduite avant la partie de la courbe en forme de dôme et qu'en l'occurrence le rapport entre la contrainte nominale pour un taux d'élongation de 20 ou supérieur à 20 et inférieur au taux d'élongation à la rupture (190°C et 1 sec⁻¹) et la contrainte nominale pour un taux d'élongation de 2 ( mêmes conditions) est supérieur à 1.

Cette réduction de l'instabilité de la contrainte nominale se traduit par une meilleure tenue en fondu utile dans les processus de mises en oeuvre exigeants sur le plan de la tenue en fondu. Par exemple, la structure des cellules d'un profilé de mousse sera plus fine et plus homogène en taille que celle obtenue avec le polymère du propylène selon l'exemple de référence.

### Exemple 3 (selon l'invention)

Cet exemple est en tout point identique à l'exemple comparatif 1R, excepté
- qu'on alimente l'extrudeuse, via la trémie (a), à un débit de 8 kg/h, avec du polymère du propylène,
- que l'on introduit, via le dispositif d'alimentation (b), 30 ml/h d'un mélange de 62% en poids de divinylbenzène et de 48 % en poids d'éthylvinylbenzène,
- que l'on introduit en différé via le deuxième dispositif d'alimentation différée (e), 1 kg/h de polymère du propylène, en même temps que 9 ml/h de 2,5-diméthyl-2,5-di-t-butylperoxyhexane (DHBP),
- que l'on introduit, via le troisième dispositif d'alimentation différée (f), à un débit de 1 kg/h, du polymère du propylène contenant par kg, 20 g de pentaérythrityl tétrakis (3,5-di-t-butyl-4-hydroxyphényl propionate) (AO1), 20 g de tris(2,4-di-t-butylphényl) phosphite (AO2) et 10 g de stéarate de calcium (StCa).

Le produit sortant de l'extrudeuse présente les caractéristiques suivantes :
- MI : 1,1 g/ 10 min
- PI : > 30 min.

Le diagramme RME (courbe 3 dans la figure en annexe) du polymère du propylène épuré par stripping montre que l'évolution de la contrainte nominale en fonction de l'allongement ne subit qu'une étape de décroissance réduite avant la partie de la courbe en forme de dôme qui précède la rupture et qu'en l'occurrence le rapport entre la contrainte nominale pour un taux d'élongation de 20 ou supérieur à 20 et inférieur au taux d'élongation à la rupture (190°C et 1 sec⁻¹) et la contrainte nominale pour un taux d'élongation de 2 (mêmes conditions) est supérieur à 1.

### Exemple 4 (selon l'invention)

Cet exemple est en tout point identique à l'exemple comparatif 1R, excepté
- qu'on alimente l'extrudeuse, via la trémie (a), à un débit de 8 kg/h, avec du polymère du propylène,
- que l'on introduit, via le premier dispositif d'alimentation (b), 40 ml/h d'un mélange de 62% en poids de divinylbenzène et de 48 % en poids d'éthylvinylbenzène,
- que l'on introduit en différé, via le deuxième dispositif d'alimentation différée (e), 1 kg/h de polymère du propylène en même temps que 9 ml/h de 2,5-diméthyl-2,5-di-t-butylperoxyhexane (DHBP),
- que l'on introduit, via le troisième dispositif d'alimentation différée (f), à un débit de 1 kg/h, du polymère du propylène contenant par kg, 20 g de pentaérythrityl tétrakis (3,5-di-t-butyl-4-hydroxyphényl propionate) (AO1), 20 g de tris(2,4-di-t-butylphényl) phosphite (AO2) et 10 g de stéarate de calcium (StCa).

Le produit sortant de l'extrudeuse présente les caractéristiques suivantes :
- MI : 0,7 g>/10 min
- PI : > 30 min.

Le diagramme RME (courbe 4 dans la figure en annexe) du polymère du propylène épuré par stripping montre que l'évolution de la contrainte nominale en fonction de l'allongement ne subit qu'une étape de décroissance réduite avant la partie de la courbe en forme de dôme qui précède la rupture et qu'en l'occurrence le rapport entre la contrainte nominale pour un taux d'élongation de 20 ou supérieur à 20 et inférieur au taux d'élongation à la rupture (190°C et 1 sec⁻¹) et la contrainte nominale pour un taux d'élongation de 2 (mêmes conditions) est supérieur à 1.

## Revendications

1. Polymère du propylène contenant des unités monomériques dérivées d'un composé fonctionnel (A) comprenant au moins deux insaturations vinyliques et un ou plusieurs noyaux aromatiques présentant un durcissement structural sous contrainte se traduisant par une augmentation de la viscosité élongationnelle à l'état fondu lors de l'allongement ou de l'extension jusqu'à rupture de la masse fondue, caractérisé en outre en ce que le rapport entre la contrainte nominale pour un taux d'élongation de 20 et la contrainte nominale pour un taux d'élongation de 2 est supérieur à 1, l'élongation étant mesurée à une température constante de 190°C sous un gradient d'élongation constant de 1 sec⁻¹.

2. Polymère du propylène selon la revendication 1, caractérisé en ce que le rapport entre la contrainte nominale pour un taux d'élongation supérieur à 20 et inférieur au taux d'élongation à la rupture et la contrainte nominale pour un taux d'élongation de 2 est supérieur à 1, l'élongation étant mesurée à une température constante de 190°C sous un gradient d'élongation constant de 1 sec⁻¹.

3. Polymère du propylène selon la revendication 2, caractérisé en ce que le rapport entre la contrainte nominale pour un taux d'élongation supérieur à 20 et inférieur au taux d'élongation à la rupture et la contrainte nominale pour un taux d'élongation de 2 est supérieur à 1 et croît avec le taux d'élongation, l'élongation étant mesurée à une température constante de 190°C sous un gradient d'élongation constant de 1 sec⁻¹.

4. Polymère du propylène selon l'une quelconque des revendications 1 à 3, dans lequel le polymère du propylène contenant des unités monomériques dérivées d'un composé fonctionnel (A) est issu de polymères du propylène choisis parmi les homopolymères du propylène et les copolymères de ce dernier contenant au moins 50 % en poids de propylène et au moins un autre monomère choisi parmi les α-oléfines contenant de 2 à 20 atomes de carbone.

5. Polymère du propylène selon l'une quelconque des revendications 1 à 4, dans lequel le composé fonctionnel (A) est le divinylbenzène.

6. Polymère du propylène selon l'une quelconque des revendications 1 à 5, dans lequel la teneur en unités monomériques dérivées du composé fonctionnel (A) est d'au moins 0,01 g par kg de polymère.

7. Polymère du propylène selon l'une quelconque des revendications 1 à 6 contenant un additif antioxydant.

8. Polymère du propylène selon la revendication 7, dans lequel la quantité d'additif antioxydant est de 0,5 à 10 g par kg de polymère.

9. Procédé continu de préparation d'un polymère du propylène contenant des unités monomériques dérivées d'au moins un composé fonctionnel (A) comprenant au moins deux insaturations vinyliques et un ou plusieurs noyaux aromatiques présentant un durcissement structural sous contrainte par mélange en fondu d'un polymère du propylène, d'au moins un composé fonctionnel (A), d'au moins un générateur de radicaux libres et d'au moins un additif antioxydant dans une extrudeuse comprenant à sa sortie une zone de compression précédant une zone d'évacuation dans lequel l'additif antioxydant est introduit dans la masse fondue au plus tard avant l'entrée de celle-ci dans ladite zone de compression, caractérisé en ce que le composé fonctionnel (A) et le générateur de radicaux libres sont introduits de manière séquencée dans le polymère du propylène.

10. Procédé selon la revendication 9, caractérisé en ce qu'on introduit initialement le composé (A) et de manière différée le générateur de radicaux libres.

11. Procédé selon la revendication 10, caractérisé en ce que le composé (A) est mélangé au polymère du propylène avant sa mise en fusion et le générateur de radicaux libres est introduit dans la masse fondue de propylène contenant le composé (A).

12. Procédé selon l'une quelconque des revendications 9 à 11, dans lequel la quantité de composé (A) mis en oeuvre est de 1 à 10 g par kg de polymère du propylène.

13. Procédé selon les revendications 9 à 12, dans lequel la quantité de générateur de radicaux libres mis en oeuvre est de 0,1 à 5 g par kg de polymère du propylène.

14. Procédé selon l'une quelconque des revendications 9 à 13, comprenant une étape d'épuration du polymère du propylène.

15. Procédé selon la revendication 14, dans lequel le polymère issu de la zone d'évacuation de l'extrudeuse est granulé puis mis en contact avec un courant gazeux pouvant être un courant d'air chaud, un courant gazeux contenant de la vapeur d'eau ou un courant de vapeur d'eau.

16. Polymère du propylène selon l'une quelconque des revendications 1 à 8, dans lequel la quantité de composé fonctionnel (A) libre (QA) est inférieure ou égale à 1 mg par kg de polymère du propylène.

17. Polymère du propylène selon l'une quelconque des revendications 1 à 8 et 16, susceptible d'être obtenu par le procédé selon l'une quelconque des revendications 9 à 15.

18. Utilisation d'un polymère du propylène selon l'une quelconque des revendications 1 à 8, 16 et 17 pour l'obtention d'objets façonnés par extrusion- ou injection-soufflage, thermoformage ou enduction.

19. Utilisation d'un polymère du propylène selon l'une quelconque des revendications 1 à 8, 16 et 17 pour la fabrication de mousses.
